# EUROPÄISCHE PATENTSCHRIFT

(11) **EP 2 807 389 B1**
(45) Veröffentlichungstag und Bekanntmachung des Hinweises auf die Patenterteilung: **12.04.2017**
(21) Anmeldenummer: 13708652.6
(22) Anmeldetag: 16.01.2013
(51) Int. Cl.: F16D 13/58, F16D 13/70

(54) **KUPPLUNGSVORRICHTUNG**
COUPLING DEVICE
DISPOSITIF D'EMBRAYAGE

(30) Priorität: 24.01.2012 DE 102012201012
(43) Veröffentlichungstag der Anmeldung: 03.12.2014
(73) Patentinhaber: Schaeffler Technologies AG & Co. KG, 91074 Herzogenaurach (DE)
(72) Erfinder: LORAN, Igor, 77839 Lichtenau (DE); RABER, Christoph, 66564 Ottweiler-Steinbach (DE)
(86) Internationale Anmeldenummer: PCT/DE2013/000023
(87) Internationale Veröffentlichungsnummer: WO 2013/110257

(56) Entgegenhaltungen:
- DE-A1-102009 024 213
- US-A- 1 939 888

## Beschreibung

Die vorliegende Erfindung betrifft eine Kupplungsvorrichtung gemäß dem Oberbegriff des Patentanspruchs 1.

Aus der DE 44 20 251 A1 ist eine Kupplungsvorrichtung bekannt, die eine Gegendruckplatte und eine durch ein Hebelelement, insbesondere durch eine Tellerfeder, in axialer Richtung begrenzt verlagerbare Anpressplatte zur reibschlüssigen Klemmung einer Kupplungsscheibe zwischen der Gegendruckplatte und der Anpressplatte aufweist. Ein Kupplungsdeckel weist mehrere Laschenabschnitte auf, durch die die Tellerfeder unter Zwischenlage zweier Drahtringe am Kupplungsdeckel verkippbar befestigt ist.

Aus der DE 10 2009 024 213 A1 ist eine Kupplungsvorrichtung gemäß dem Oberbegriff des Patentanspruchs 1 bekannt.

Es ist Aufgabe der vorliegenden Erfindung, eine Kupplungsvorrichtung anzugeben, die kostengünstig hergestellt werden kann.

Erfindungsgemäß gelöst wird diese Aufgabe durch eine Kupplungsvorrichtung gemäß Patentanspruch 1 mit einer Gegendruckplatte und einer durch zumindest ein Hebelelement in axialer Richtung begrenzt verlagerbaren Anpressplatte zur reibschlüssigen Klemmung einer Kupplungsscheibe zwischen der Gegendruckplatte und der Anpressplatte. Da die Gegendruckplatte zumindest einen Laschenabschnitt aufweist, an dem das Hebelelement verkippbar gelagert ist, kann auf einen separaten Kupplungsdeckel, an dem das Hebelelement üblicherweise verkippbar befestigt ist, verzichtet werden. Die Anpressplatte weist zumindest ein Paar von in Umfangsrichtung voneinander beabstandeten Radialvorsprüngen auf, zwischen denen der Laschenabschnitt oder einer der Laschenabschnitte der Gegendruckplatte angeordnet ist. Somit kann die Kupplungsvorrichtung kostengünstig hergestellt werden. Die Anordnung der Radialvorsprünge ermöglicht ferner einen besonders kompakten Aufbau der Kupplungsvorrichtung.

Insbesondere ist die Kupplungsvorrichtung für einen Antriebsstrang eines Kraftfahrzeugs geeignet.

Ferner wird eine Kupplungsvorrichtung mit Kupplungsdeckel, insbesondere beim Ersatz einer anderen Kupplungsvorrichtung beispielsweise in Werkstätten, üblicherweise mit Gegenkraft montiert, was zu einer Verformung des Kupplungsdeckels führt. Durch diese Verformung verschiebt sich der Betriebspunkt der Kupplungsvorrichtung, was in den wenigsten Werkstätten kompensiert werden kann. Da bei der erfindungsgemäßen Kupplungsvorrichtung die Abstützung der Hebelelemente durch gegendruckplattenseitige Laschenabschnitte erfolgt, ist die erfindungsgemäße Kupplungsvorrichtung insbesondere auch für den Reparatureinsatz in Werkstätten geeignet.

Bevorzugte Ausführungsbeispiele der vorliegenden Erfindung sind in den abhängigen Ansprüchen dargelegt.

Es ist möglich, dass die Kupplungsvorrichtung nur ein einziges, integrales Hebelelement aufweist. Dieses Hebelelement kann bei einer normal-eingerückten Kupplungsvorrichtung als im Wesentlichen ringförmige Tellerfeder und bei einer normal-ausgerückten Kupplungsvorrichtung als im Wesentlichen ringförmige Hebelfeder ausgebildet sein. Ebenso ist es möglich, dass die Kupplungsvorrichtung mehrere separate, in Umfangsrichtung voneinander beabstandete Hebelelemente aufweist. Allen vorgenannten Hebelelementen ist es gemeinsam, dass sie jeweils zumindest eine Hebelzunge aufweisen, durch die das Hebelelement bzw. die Hebelelemente durch eine Aktoreinrichtung zum Ausrücken und/oder zum Einrücken der Kupplungsvorrichtung betätigbar, d.h. verkippbar ist bzw. sind. Die Hebelzungen sind vorzugsweise in radialer Richtung innerhalb der Kupplungsvorrichtung, insbesondere vorzugsweise nahe der Drehachse der Kupplungsvorrichtung, angeordnet.

Gemäß einem bevorzugten Ausführungsbeispiel weist die Gegendruckplatte mehrere in Umfangsrichtung voneinander beabstandete Laschenabschnitte auf, die einteilig mit der Gegendruckplatte ausgebildet sind und auf einer Kreisbahn angeordnet sind. Vorzugsweise sind die Laschenabschnitte in Umfangsrichtung gleichmäßig voneinander beabstandet, wodurch ein gleichmäßiges Einrückverhalten und/oder Ausrückverhalten der Kupplungsvorrichtung erzielt werden kann.

Es ist von Vorteil, wenn die Laschenabschnitte in radialer Richtung außerhalb einer Reibfläche der Gegendruckplatte angeordnet sind. Dies ermöglicht zum Einen einen besonders kompakten Aufbau der Kupplungsvorrichtung, und ermöglicht zum Anderen eine vorteilhafte Abstützung des Hebelelements bzw. der Hebelelemente.

Weiterhin ist es von Vorteil, wenn durch jeden Laschenabschnitt ein separates Hebelelement verkippbar gelagert ist. Auf ein komplex ausgebildetes, ringförmiges Hebelelement mit mehreren in radialer Richtung innen angeordneten Hebelzungen kann somit verzichtet werden. Die separaten Hebelelemente können kostengünstig hergestellt werden und montiert werden.

Vorzugsweise erstreckt sich der Laschenabschnitt im Wesentlichen in axialer Richtung. Weiterhin vorzugsweise ist der Laschenabschnitt umformtechnisch aus der ansonsten im Wesentlichen planen Gegendruckplatte ausgebildet. Insbesondere ist es in diesem Zusammenhang von Vorteil, wenn die gesamte Gegendruckplatte mit ihren Laschenabschnitten als Blechbauteil in einem kombinierten Stanz- und Umformverfahren hergestellt wird, während dessen auch die Aufstellung der Laschenabschnitte erfolgt, so dass diese rechtwinklig zur Reibfläche der Gegendruckplatte angeordnet sind.

Insbesondere ist es von Vorteil, wenn die Laschenabschnitte und radial äußere Ränder der Radialvorsprünge der Anpressplatte im Wesentlichen auf derselben Kreisbahn angeordnet sind. Hierdurch können die äußeren Abmessungen der Kupplungsvorrichtung weiter verringert werden.

Hierbei ist es insbesondere von Vorteil, wenn der Laschenabschnitt mit dem Paar von Radialvorsprüngen eine Drehmitnahme zur Übertragung eines Drehmoments von der Gegendruckplatte auf die Anpressplatte ausbildet. Hierfür können sich eine erste Flanke des Laschenabschnitts mit einem ersten der beiden Radialvorsprünge und eine zweite Flanke des Laschenabschnitts mit einem zweiten der beiden Radialvorsprünge in unmittelbarer Anlage befinden. Bei der Anlage ist zu beachten, dass eine Spielpassung vorteilhaft ist, um die axiale Verlagerbarkeit der Anpressplatte bezüglich der Gegendruckplatte zu begünstigen und gleichzeitig das Drehmoment zu übertragen. Auch ist es möglich, dass weitere Bauteile oder Bauteilabschnitte in Umfangsrichtung zwischen der jeweiligen Flanke des Laschenabschnitts und dem jeweils nächstliegenden Radialvorsprung der Anpressplatte angeordnet sind.

Vorzugsweise weist das Hebelelement zumindest einen Betätigungsabschnitt auf, der sich mit einem Abhubanker, der mit der Anpressplatte verbunden ist oder einteilig mit der Anpressplatte ausgebildet ist, zur axialen Verlagerung der Anpressplatte in Wirkbeziehung befindet. Vorzugsweise handelt es sich bei der Wirkbeziehung um einen mittelbaren oder unmittelbaren Eingriff. Insbesondere ist es von Vorteil, wenn der Betätigungsabschnitt biegesteif ausgebildet ist. Der Abhubanker ist vorzugsweise als Blechbauteil ausgebildet und wird in einem kombinierten Stanz- und Umformverfahren hergestellt.

Weiterhin ist es von Vorteil, wenn der Betätigungsabschnitt des Hebelelements sich durch eine Aussparung des Laschenabschnitts hindurch erstreckt. Vorzugsweise erstreckt sich der Betätigungsabschnitt im Wesentlichen in radialer Richtung durch die im Laschenabschnitt vorgesehene Aussparung hindurch. Dies beinhaltet auch, dass der Betätigungsabschnitt im Bereich der laschenabschnittseitigen Aussparung eine Richtungsänderung in axialer Richtung aufweisen kann.

Vorzugsweise befindet sich eine von der Anpressplatte abgewandte Oberfläche des Betätigungsabschnitts mit einer die Aussparung in axialer Richtung begrenzenden Kante in Anlage. Hierdurch kann das Hebelelement auf einfache Art und Weise in axialer Richtung der Kupplungsvorrichtung abgestützt werden.

Weiterhin ist es von Vorteil, wenn der Abhubanker mit dem Paar von Radialvorsprüngen der Anpressplatte, vorzugsweise auf einer einer Reibfläche der Gegendruckplatte zugewandten Seite der Anpressplatte, verbunden, vorzugsweise vernietet, ist. Hierdurch kann eine besonders zuverlässige Verbindung des Abhubankers mit der Anpressplatte erzielt werden.

Vorzugsweise ist der Laschenabschnitt in radialer Richtung zwischen dem Abhubanker und der Anpressplatte, vorzugsweise einer Reibfläche der Anpressplatte, angeordnet. Auch dies ermöglicht einen besonders kompakten Aufbau der Kupplungsvorrichtung.

Insbesondere vorzugsweise umgreift der Abhubanker den Laschenabschnitt zwischen dem Paar von Radialvorsprüngen der Anpressplatte in radialer Richtung. Hierdurch können die äußeren Abmessungen der Kupplungsvorrichtung weiter verringert werden.

Gemäß einem weiteren bevorzugten Ausführungsbeispiel weist der Abhubanker eine Aussparung auf, in die der Betätigungsabschnitt des Hebelelements, vorzugsweise ein in radialer Richtung außen angeordnetes Ende des Betätigungsabschnitts des Hebelelements, eingreift. Hierdurch können die äußeren Abmessungen der Kupplungsvorrichtung in radialer Richtung weiter verringert werden. Ferner weisen der Betätigungsabschnitt des Hebelelements und die Aussparung vorzugsweise im Wesentlichen die gleiche Außenkontur bzw. Innenkontur auf, so dass sie im Zuge einer Spielpassung ineinandersteckbar sind. Dabei ist es alternativ oder zusätzlich zur zuvor beschriebenen Drehmomentübertragung über die Laschenabschnitte der Gegendruckplatte und die Radialvorsprünge der Anpressplatte möglich, das Drehmoment über die Laschenabschnitte der Gegendruckplatte, die Betätigungsabschnitte der Hebelelemente und die Abhubanker auf die Anpressplatte zu übertragen.

Vorzugsweise ist die Aussparung des Abhubankers in axialer Richtung, vorzugsweise sowohl im eingerückten Zustand als auch im ausgerückten Zustand der Kupplungsvorrichtung, näher an einer Reibfläche der Gegendruckplatte angeordnet als die Aussparung des Laschenabschnitts. Hierdurch können die äußeren Abmessungen der Kupplungsvorrichtung in axialer Richtung weiter verringert werden.

Gemäß einem weiteren bevorzugten Ausführungsbeispiel weist das Hebelelement zumindest einen Federabschnitt auf, der sich mit einer einer Reibfläche der Gegendruckplatte abgewandten Kante des Laschenabschnitts in Anlage befindet. Im Unterschied zum Betätigungsabschnitt ist der Federabschnitt elastisch bzw. elastischer als der Betätigungsabschnitt ausgebildet.

Es ist von Vorteil, wenn jedes der Hebelelemente ein Paar von Federabschnitten aufweist, die sich in radialer Richtung erstrecken, und der Betätigungsabschnitt in Umfangsrichtung zwischen den beiden Federabschnitten angeordnet ist.

Vorzugsweise ist in axialer Richtung zwischen der Anpressplatte und dem Hebelelement oder den Hebelelementen eine, vorzugsweise ringförmige, Tellerfeder angeordnet.

Hierbei ist es von Vorteil, wenn die Tellerfeder in radialer Richtung innerhalb der auf einer Kreisbahn angeordneten Laschenabschnitte angeordnet ist. Dies ermöglicht einen besonders kompakten Aufbau der Kupplungsvorrichtung.

Weiterhin ist es von Vorteil, wenn die Tellerfeder sich einerseits, vorzugsweise über ihren Innenradius, mittelbar oder unmittelbar an der Anpressplatte und andererseits, vorzugsweise über ihren Außenradius, mittelbar oder unmittelbar an dem Hebelelement oder den Hebelelementen abstützt.

Vorzugsweise ist ein Drahtring zwischen der Tellerfeder und dem Hebelelement oder den Hebelelementen angeordnet, wodurch die Reibung beim Ausrücken und Einrücken der Kupplungsvorrichtung verringert werden kann, und das Verschleißverhalten über die Lebensdauer der Kupplungsvorrichtung verbessert werden kann.

Weiterhin vorzugsweise weist die Anpressplatte auf ihrer einer Reibfläche der Gegendruckplatte abgewandten Seite einen oder mehrere Axialvorsprünge auf, die sich mit einem Innenradius der Tellerfeder in Anlage befinden. Diese Axialvorsprünge erlauben eine einfache und kostengünstige Zentrierung der Tellerfeder.

Es ist von Vorteil, wenn die Gegendruckplatte zumindest einen Befestigungsabschnitt zur drehfesten Verbindung mit einem Eingangsbauteil, vorzugsweise einem Schwungrad oder der Sekundärmasse eines Zweimassenschwungrads, aufweist. Beispielsweise kann diese Verbindung als eine oder mehrere Nietverbindungen erfolgen.

Weiterhin ist es von Vorteil, wenn die Gegendruckplatte mehrere in Umfangsrichtung, vorzugsweise gleichmäßig, voneinander beabstandete Befestigungsabschnitte aufweist, die einteilig mit der Gegendruckplatte ausgebildet sind und auf einer Kreisbahn angeordnet sind. Hierdurch kann die Anzahl der Bauteile weiter verringert werden.

Ebenfalls ist es weiterhin von Vorteil, wenn die Befestigungsabschnitte in radialer Richtung außerhalb einer Reibfläche der Gegendruckplatte angeordnet sind. Dies ermöglicht zum Einen einen besonders kompakten Aufbau der Kupplungsvorrichtung, und stellt zum Anderen die Zugänglichkeit der Befestigungsabschnitte nach der Montage der Kupplungsvorrichtung sicher.

Vorzugsweise ist der Laschenabschnitt oder einer der Laschenabschnitte in Umfangsrichtung zwischen zwei benachbarten Befestigungsabschnitten angeordnet. Hierdurch kann die gesamte Gegendruckplatte mit ihren Laschenabschnitten und Befestigungsabschnitten als Blechbauteil in einem kombinierten Stanz- und Umformverfahren hergestellt werden.

Weiterhin vorzugsweise weist die Gegendruckplatte eine gleiche Anzahl von Laschenabschnitten und Befestigungsabschnitten auf, wobei die Laschenabschnitte und Befestigungsabschnitte in Umfangsrichtung abwechselnd angeordnet sind.

Die vorliegende Erfindung wird nachfolgend anhand von bevorzugten Ausführungsbeispielen in Verbindung mit den zugehörigen Figuren näher erläutert. In diesen zeigen:
- Figur 1: ein Ausführungsbeispiel einer Kupplungsvorrichtung mit einer Gegendruckplatte, die Laschenabschnitte zur verkippbaren Abstützung von Hebelelementen aufweist, in einer perspektivischen Ansicht,
- Figur 2: die Kupplungsvorrichtung aus Figur 1 in einem Halbschnitt,
- Figur 3: die Gegendruckplatte der Kupplungsvorrichtung aus Figur 1 in einer perspektivischen Ansicht, und
- Figur 4: die Kupplungsvorrichtung aus Figur 1 mit eingangsseitigem Schwungrad in einer Schnittansicht.

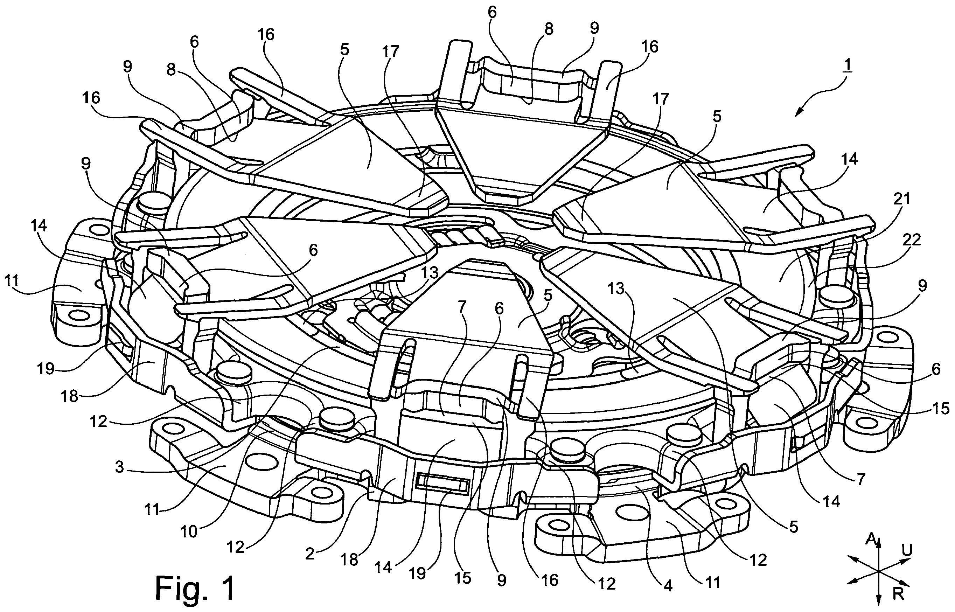

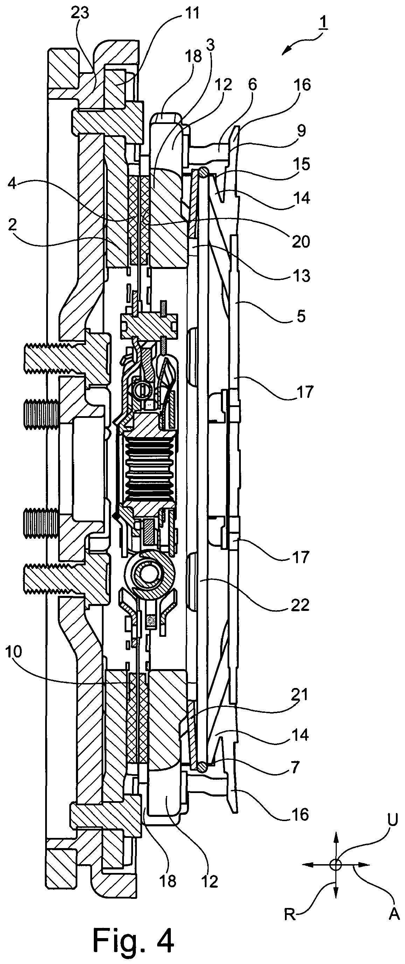

Die Figuren 1 bis 4 betreffen ein bevorzugtes Ausführungsbeispiel einer Kupplungsvorrichtung 1. Merkmale, die in der vorliegenden Beschreibung nicht als erfindungswesentlich gekennzeichnet sind, sind als optional zu verstehen. Daher betrifft die nachfolgende Beschreibung auch weitere Ausführungsbeispiele der Kupplungsvorrichtung 1, die Teilkombinationen der im Folgenden zu erläuternden Merkmale aufweisen. Die Kupplungsvorrichtung 1 ist insbesondere als Reibungskupplung ausgebildet und für den Antriebsstrang eines Kraftfahrzeugs vorgesehen.

Die Kupplungsvorrichtung 1 weist zumindest eine Gegendruckplatte 2, zumindest eine Anpressplatte 3 und zumindest eine in axialer Richtung A der Kupplungsvorrichtung 1 zwischen der Gegendruckplatte 2 und der Anpressplatte 3 angeordnete Kupplungsscheibe 4 auf. Die Gegendruckplatte 2 definiert eine Eingangsseite der Kupplungsvorrichtung 1, während die Kupplungsscheibe 4 eine Ausgangsseite der Kupplungsvorrichtung 1 definiert.

Die Anpressplatte 3 ist bezüglich der Gegendruckplatte 2 drehfest gelagert und in axialer Richtung A begrenzt verlagerbar. Durch die Verlagerung der Anpressplatte 3 in axialer Richtung A ist die Kupplungsscheibe 4 zwischen der Gegendruckplatte 2 und der Anpressplatte 3, genauer gesagt zwischen einer Reibfläche 10 der Gegendruckplatte 2 und einer Reibfläche 20 der Anpressplatte 3, reibschlüssig klemmbar, so dass ein Drehmoment von der Eingangsseite der Kupplungsvorrichtung 1 zur Ausgangsseite der Kupplungsvorrichtung 1 übertragen werden kann.

Darüber hinaus weist die Kupplungsvorrichtung 1 mehrere Hebelelemente 5 auf, die bezüglich der Gegendruckplatte 2 verkippbar abgestützt und gelagert sind, und die durch eine nicht dargestellte Aktoreinrichtung betätigbar sind. Die einzelnen Hebelelemente 5 sind in Umfangsrichtung U der Kupplungsvorrichtung 1 voneinander beabstandet und erstrecken sich in radialer Richtung R der Kupplungsvorrichtung 1. Jedes der Hebelelemente 5 weist eine Hebelzunge 17 auf, durch die die Hebelelemente 5 gemeinsam durch die Aktoreinrichtung zum Ausrücken und/oder zum Einrücken der Kupplungsvorrichtung 1 betätigbar, d.h. verkippbar sind.

Die Hebelzungen 17 sind vorzugsweise in radialer Richtung R innenliegend, d. h. nahe der Drehachse der Kupplungsvorrichtung 1, angeordnet.

Im dargestellten Ausführungsbeispiel weist die Gegendruckplatte 2 eine Anzahl von Laschenabschnitten 6 auf, die der Anzahl von Hebelelementen 5 entspricht. Jedes der Hebelelemente 5 ist durch einen der Laschenabschnitte 6 verkippbar abgestützt und gelagert.

Die Laschenabschnitte 6 sind in Umfangsrichtung U gleichmäßig voneinander beabstandet und einteilig mit der Gegendruckplatte 2 ausgebildet. Insbesondere sind die Laschenabschnitte 6 auf einer Kreisbahn angeordnet. In radialer Richtung R sind die Laschenabschnitte 6 außerhalb der Reibfläche 10 der Gegendruckplatte 2 angeordnet. Ferner erstrecken sich die Laschenabschnitte 6 im Wesentlichen in axialer Richtung A. Vorzugsweise sind die Laschenabschnitte 6 umformtechnisch aus der ansonsten im Wesentlichen planen Gegendruckplatte 2 ausgebildet.

Die Anpressplatte 3 weist mehrere Paare von in Umfangsrichtung U voneinander beabstandeten Radialvorsprüngen 12 auf. In Umfangsrichtung U zwischen jedem Paar von anpressplattenseitigen Radialvorsprüngen 12 erstreckt sich einer der Laschenabschnitte 6 der Gegendruckplatte 2 in axialer Richtung A über die Anpressplatte 3 hinaus. Die Laschenabschnitte 6 und radial äußere Ränder der Radialvorsprünge 12 der Anpressplatte 3 sind im dargestellten Ausführungsbeispiel im Wesentlichen auf derselben Kreisbahn angeordnet.

Es ist möglich, dass die Laschenabschnitte 6 mit den Paaren von Radialvorsprüngen 12 Drehmitnahmen zur Übertragung des Drehmoments von der Gegendruckplatte 2, d.h. von der Eingangsseite der Kupplungsvorrichtung 1, auf die Anpressplatte 3 ausbilden. Hierzu sind vorzugsweise Spielpassungen zwischen den jeweiligen Radialvorsprüngen 12 und den in Umfangsrichtung U benachbarten Flanken der jeweiligen Laschenabschnitte 6 vorzusehen. Alternativ oder zusätzlich ist es jedoch auch möglich, das Drehmoment über die Laschenabschnitte 6 der Gegendruckplatte 5, die Hebelelemente 5 und über Abhubanker 18, auf die nachfolgend noch eingegangen wird, auf die Anpressplatte 3 zu übertragen.

Insbesondere weist im dargestellten Ausführungsbeispiel jedes der Hebelelemente 5 einen Betätigungsabschnitt 14 auf. Mit der Anpressplatte 3 ist eine der Anzahl der Hebelelemente 5 entsprechende Anzahl von Abhubankern 18 verbunden. Insbesondere ist jeder der Abhubanker 18 mit einem der Paare von Radialvorsprüngen 12 der Anpressplatte 3 auf einer der Reibfläche 10 der Gegendruckplatte 2 zugewandten Seite der Anpressplatte 3 verbunden, vorzugsweise vernietet oder verschraubt. Obwohl dies nicht dargestellt ist, ist es jedoch auch möglich, dass die Abhubanker 18 einteilig mit der Anpressplatte 3 ausgebildet sind.

Die jeweiligen Betätigungsabschnitte 14 der Hebelelemente 5 befinden sich zur axialen Verlagerung der Anpressplatte 3 mit den jeweiligen Abhubankern 18 in Wirkbeziehung, vorzugsweise in Eingriff. Insbesondere weist jeder der Abhubanker 18 eine Aussparung 19 auf, in die der Betätigungsabschnitt 14 des jeweiligen Hebelelements 5, genauer gesagt ein in radialer Richtung R außen angeordnetes Ende des Betätigungsabschnitts 14 des Hebelelements 5, eingreift. Ferner weisen die Betätigungsabschnitte 14 der Hebelelemente 5 und die Aussparung 19 vorzugsweise im Wesentlichen die gleiche Außenkontur bzw. Innenkontur auf, so dass sie im Zuge einer Spielpassung ineinandersteckbar sind. Dabei ist es alternativ oder zusätzlich zur zuvor beschriebenen Drehmomentübertragung über die Laschenabschnitte 6 der Gegendruckplatte 2 und die Radialvorsprünge 12 der Anpressplatte 3 möglich, das Drehmoment über die Laschenabschnitte 6 der Gegendruckplatte 2 , die Betätigungsabschnitte 14 der Hebelelemente 5 und die Abhubanker 18 auf die Anpressplatte 3 zu übertragen.

Jeder der Laschenabschnitte 6 ist im dargestellten Ausführungsbeispiel in radialer Richtung R zwischen dem benachbarten Abhubanker 18 und der Anpressplatte 3 angeordnet. Genauer gesagt ist jeder der Laschenabschnitte 6 in radialer Richtung R zwischen dem benachbarten Abhubanker 18 und der Reibfläche 20 der Anpressplatte 3 angeordnet. Jeder der Abhubanker 18 umgreift den benachbarten Laschenabschnitt 6 zwischen dem jeweiligen Paar von Radialvorsprüngen 12 der Anpressplatte 3 in radialer Richtung R.

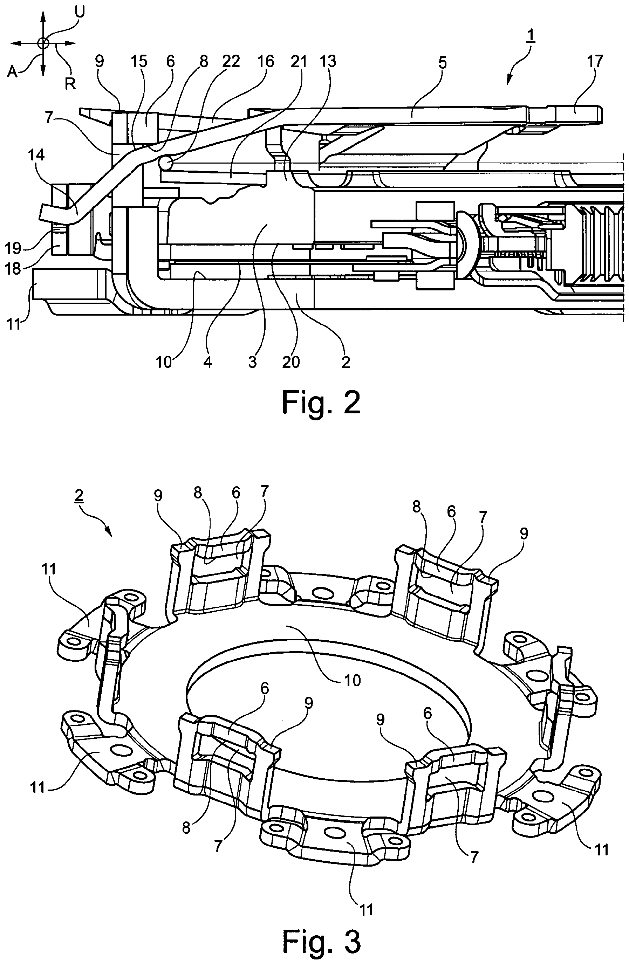

Ferner weist jeder der Laschenabschnitte 6 eine Aussparung 7 auf, durch die sich der Betätigungsabschnitt 14 des jeweiligen Hebelelements 5 im Wesentlichen in radialer Richtung R hindurch erstreckt. Wie aus Figur 2 ersichtlich, beinhaltet dies auch, dass der jeweilige Betätigungsabschnitt 14 im Bereich der laschenabschnittseitigen Aussparung 7 eine Richtungsänderung in axialer Richtung A aufweisen kann. Ferner ist in Figur 2 dargestellt, dass sich eine von der Anpressplatte 3 abgewandte Oberfläche 15 des Betätigungsabschnitts 14 mit einer die Aussparung 7 in axialer Richtung A begrenzenden Kante 8 in Anlage befindet.

Die Aussparung 19 des Abhubankers 18 ist in axialer Richtung A, vorzugsweise sowohl im eingerückten Zustand als auch im ausgerückten Zustand der Kupplungsvorrichtung 1, näher an der Reibfläche 10 der Gegendruckplatte 2 angeordnet als die Aussparung 7 des Laschenabschnitts 6.

Jedes der Hebelelemente 5 weist ein Paar von Federabschnitten 16 auf, die sich in radialer Richtung R erstrecken. Der Betätigungsabschnitt 14 des jeweiligen Hebelelements 5 ist in Umfangsrichtung U zwischen den beiden Federabschnitten 16 angeordnet. Die Federabschnitte 16 befinden sich mit einer der Reibfläche 10 der Gegendruckplatte 2 abgewandten Kante 9 des jeweiligen Laschenabschnitts 6 in Anlage, um das jeweilige Hebelelement 5, und insbesondere den biegesteifen Betätigungsabschnitt 14, elastisch vorzuspannen und mittels endseitiger Hinterschneidungen, insbesondere bei der Montage, aber auch im Betreib der Kupplungsvorrichtung 1, in Position zu halten.

In axialer Richtung A zwischen der Anpressplatte 3 und den Hebelelementen 5 ist eine, im dargestellten Ausführungsbeispiel ringförmige, Tellerfeder 21 angeordnet. Die Tellerfeder 21 ist in radialer Richtung R innerhalb der auf der zuvor genannten Kreisbahn angeordneten Laschenabschnitte 6 angeordnet.

Einerseits stützt sich die Tellerfeder 21 über ihren Innenradius mittelbar oder unmittelbar an der Anpressplatte 3 ab. Insbesondere weist die Anpressplatte 3 auf ihrer der Reibfläche 10 der Gegendruckplatte 2 abgewandten Seite einen oder mehrere Axialvorsprünge 13 auf, die sich mit dem Innenradius der Tellerfeder 21 in Anlage befinden. Andererseits stützt sich die Tellerfeder 21 über ihren Außenradius mittelbar oder unmittelbar an den Hebelelementen 5 ab. Insbesondere ist ein Drahtring 22 zwischen der Tellerfeder 21 und den Hebelelementen 5, genauer gesagt den biegesteifen Betätigungsabschnitten 14 der jeweiligen Hebelelemente 5, angeordnet. Die Tellerfeder 21 ist in der Kupplungsvorrichtung 1 derart angeordnet, dass sie sich in radialer Richtung R nach außen konisch aufstellt, um die Anpressplatte 3 und die Hebelelemente 5 gegenüber den gegendruckplattenseitigen Laschenabschnitten 6 zu verspannen.

Die Gegendruckplatte 2 weist ferner mehrere in Umfangsrichtung U gleichmäßig voneinander beabstandete Befestigungsabschnitte 11 auf, die einteilig mit der Gegendruckplatte 2 ausgebildet sind und auf einer Kreisbahn angeordnet sind. Insbesondere sind die Befestigungsabschnitte 11 in radialer Richtung R außerhalb der Reibfläche 10 der Gegendruckplatte 2 angeordnet. Besagte Kreisbahn ist vorzugsweise in radialer Richtung R weiter außen angeordnet als die zuvor genannte Kreisbahn, auf der die gegendruckplattenseitigen Laschenabschnitte 6 und die anpressplattenseitigen Radialvorsprünge 12 angeordnet sind.

Die Befestigungsabschnitte 11 sind zur drehfesten Verbindung mit einem Eingangsbauteil, vorzugsweise einem Schwungrad 23 oder der Sekundärmasse eines Zweimassenschwungrads, vorgesehen. Beispielsweise kann diese Verbindung durch Niete oder Schraube erfolgen.

Entsprechende Löcher für die Niete oder Schrauben sind vorzugsweise derart im Außenbereich der Kupplungsvorrichtung 1 angeordnet, dass sie auch nach der Montage der Kupplungsvorrichtung 1 zugänglich sind, um die Kupplungsvorrichtung 1 auf ihrer Eingangsseite mit dem Schwungrad 23 oder der Sekundärmasse des Zweimassenschwungrads zu verbinden.

Die Gegendruckplatte 2 weist eine gleiche Anzahl von Laschenabschnitten 6 und Befestigungsabschnitten 11 auf. Der jeweilige Laschenabschnitt 6 ist in Umfangsrichtung U zwischen zwei benachbarten Befestigungsabschnitten 11 angeordnet. Insbesondere sind die Laschenabschnitte 6 und Befestigungsabschnitte 11 in Umfangsrichtung U abwechselnd angeordnet.

Die vorgenannten Ausführungsbeispiele betreffen eine Kupplungsvorrichtung 1, insbesondere für einen Antriebsstrang eines Kraftfahrzeugs, mit einer Gegendruckplatte 2 und einer durch zumindest ein Hebelelement 5 in axialer Richtung A begrenzt verlagerbaren Anpressplatte 3 zur reibschlüssigen Klemmung einer Kupplungsscheibe 4 zwischen der Gegendruckplatte 2 und der Anpressplatte 3, wobei die Gegendruckplatte 2 zumindest einen Laschenabschnitt 6 aufweist, an dem das Hebelelement 5 verkippbar gelagert ist.

### Bezugszeichenliste

- 1: Kupplungsvorrichtung
- 2: Gegendruckplatte
- 3: Anpressplatte
- 4: Kupplungsscheibe
- 5: Hebelelement
- 6: Laschenabschnitt
- 7: Aussparung
- 8: Kante
- 9: Kante
- 10: Reibfläche
- 11: Befestigungsabschnitt
- 12: Radialvorsprung
- 13: Axialvorsprung
- 14: Betätigungsabschnitt
- 15: Oberfläche
- 16: Federabschnitt
- 17: Hebelzunge
- 18: Abhubanker
- 19: Aussparung
- 20: Reibfläche
- 21: Tellerfeder
- 22: Drahtring
- 23: Schwungrad
- A: axiale Richtung
- R: radiale Richtung
- U: Umfangsrichtung

## Patentansprüche

1. Kupplungsvorrichtung (1), insbesondere für einen Antriebsstrang eines Kraftfahrzeugs, mit einer Gegendruckplatte (2) und einer durch zumindest ein Hebelelement (5) in axialer Richtung (A) begrenzt verlagerbaren Anpressplatte (3) zur reibschlüssigen Klemmung einer Kupplungsscheibe (4) zwischen der Gegendruckplatte (2) und der Anpressplatte (3), wobei die Gegendruckplatte (2) zumindest einen Laschenabschnitt (6) aufweist, an dem das Hebelelement (5) verkippbar gelagert ist, **dadurch gekennzeichnet, dass** die Anpressplatte (3) zumindest ein Paar von in Umfangsrichtung (U) voneinander beabstandeten Radialvorsprüngen (12) aufweist, zwischen denen der Laschenabschnitt (6) oder einer der Laschenabschnitte (6) der Gegendruckplatte (2) angeordnet ist.

2. Kupplungsvorrichtung (1) nach Anspruch 1, wobei die Laschenabschnitte (6) und radial äußere Ränder der Radialvorsprünge (12) der Anpressplatte (3) im Wesentlichen auf derselben Kreisbahn angeordnet sind.

3. Kupplungsvorrichtung (1) nach Anspruch 1 oder 2, wobei der Laschenabschnitt (6) mit dem Paar von Radialvorsprüngen (12) eine Drehmitnahme zur Übertragung eines Drehmoments von der Gegendruckplatte (2) auf die Anpressplatte (3) ausbildet.

4. Kupplungsvorrichtung (1) nach zumindest einem der Ansprüche 1 bis 3, wobei das Hebelelement (5) zumindest einen Betätigungsabschnitt (14) aufweist, der sich mit einem Abhubanker (18), der mit der Anpressplatte (3) verbunden ist oder einteilig mit der Anpressplatte (3) ausgebildet ist, zur axialen Verlagerung der Anpressplatte (3) in Wirkbeziehung, vorzugsweise in Eingriff, befindet.

5. Kupplungsvorrichtung (1) nach Anspruch 4, wobei der Abhubanker (18) mit dem Paar von Radialvorsprüngen (12) der Anpressplatte (3), vorzugsweise auf einer einer Reibfläche (10) der Gegendruckplatte (2) zugewandten Seite der Anpressplatte (3), verbunden, vorzugsweise vernietet, ist.

6. Kupplungsvorrichtung (1) nach Anspruch 4 oder 5, wobei der Abhubanker (18) den Laschenabschnitt (6) zwischen dem Paar von Radialvorsprüngen (12) der Anpressplatte (3) in radialer Richtung (R) umgreift.

7. Kupplungsvorrichtung (1) nach zumindest einem der Ansprüche 4 bis 6, wobei der Abhubanker (18) eine Aussparung (19) aufweist, in die der Betätigungsabschnitt (14) des Hebelelements (5), vorzugsweise ein in radialer Richtung (R) außen angeordnetes Ende des Betätigungsabschnitts (14) des Hebelelements (5), eingreift.

8. Kupplungsvorrichtung (1) nach Anspruch 7, wobei die Aussparung (19) des Abhubankers (18) in axialer Richtung (A), vorzugsweise sowohl im eingerückten Zustand als auch im ausgerückten Zustand der Kupplungsvorrichtung (1), näher an einer Reibfläche (10) der Gegendruckplatte (2) angeordnet ist als die Aussparung (7) des Laschenabschnitts (6).

9. Kupplungsvorrichtung (1) nach zumindest einem der Ansprüche 1 bis 8, wobei in axialer Richtung (A) zwischen der Anpressplatte (3) und dem Hebelelement (5) oder den Hebelelementen (5) eine, vorzugsweise ringförmige, Tellerfeder (21) angeordnet ist, und wobei ein Drahtring (22) zwischen der Tellerfeder (21) und dem Hebelelement (5) oder den Hebelelementen (5) angeordnet ist.

10. Kupplungsvorrichtung (1) nach zumindest einem der Ansprüche 1 bis 9, wobei die Gegendruckplatte (2) zumindest einen Befestigungsabschnitt (11) zur drehfesten Verbindung mit einem Eingangsbauteil, vorzugsweise einem Schwungrad (23) oder der Sekundärmasse eines Zweimassenschwungrads, aufweist.

11. Kupplungsvorrichtung (1) nach Anspruch 10, wobei die Gegendruckplatte (2) mehrere in Umfangsrichtung (U), vorzugsweise gleichmäßig, voneinander beabstandete Befestigungsabschnitte (11) aufweist, die einteilig mit der Gegendruckplatte (2) ausgebildet sind und auf einer Kreisbahn angeordnet sind.

12. Kupplungsvorrichtung (1) nach Anspruch 11, wobei die Befestigungsabschnitte (11) in radialer Richtung (R) außerhalb einer Reibfläche (10) der Gegendruckplatte (2) angeordnet sind.

13. Kupplungsvorrichtung (1) nach zumindest einem der Ansprüche 10 bis 12, wobei der Laschenabschnitt (6) oder einer der Laschenabschnitte (6) in Umfangsrichtung (U) zwischen zwei benachbarten Befestigungsabschnitten (11) angeordnet ist.

14. Kupplungsvorrichtung (1) nach Anspruch 13, wobei die Gegendruckplatte (2) eine gleiche Anzahl von Laschenabschnitten (6) und Befestigungsabschnitten (11) aufweist, und die Laschenabschnitte (6) und Befestigungsabschnitte (11) in Umfangsrichtung (U) abwechselnd angeordnet sind.

## Claims

1. Clutch apparatus (1), in particular for a drive train of a motor vehicle, having a counterpressure plate (2) and a pressure plate (3) which can be moved to a limited extent in the axial direction (A) by way of at least one lever element (5) for frictionally locking clamping of a clutch plate (4) between the counterpressure plate (2) and the pressure plate (3), the counterpressure plate (2) having at least one tab section (6), on which the lever element (5) is mounted such that it can be tilted, **characterized in that** the pressure plate (3) has at least one pair of radial projections (12) which are spaced apart from one another in the circumferential direction (U) and between which the tab section (6) or one of the tab sections (6) of the counterpressure plate (2) is arranged.

2. Clutch apparatus (1) according to Claim 1, the tab sections (6) and radially outer edges of the radial projections (12) of the pressure plate (3) being arranged substantially on the same circular path.

3. Clutch apparatus (1) according to Claim 1 or 2, the tab section (6) forming, with the pair of radial projections (12), a rotary driving means for transmitting a torque from the counterpressure plate (2) to the pressure plate (3).

4. Clutch apparatus (1) according to at least one of Claims 1 to 3, the lever element (5) having at least one actuating section (14) which is in an operative relationship, preferably in engagement, with a lift anchor (18) which is connected to the pressure plate (3) or is configured in one piece with the pressure plate (3), for the axial movement of the pressure plate (3).

5. Clutch apparatus (1) according to Claim 4, the lift anchor (18) being connected, preferably riveted, to the pair of radial projections (12) of the pressure plate (3), preferably on a side of the pressure plate (3) which faces a frictional face (10) of the counterpressure plate (2).

6. Clutch apparatus (1) according to Claim 4 or 5, the lift anchor (18) engaging around the tab section (6) in the radial direction (R) between the pair of radial projections (12) of the pressure plate (3).

7. Clutch apparatus (1) according to at least one of Claims 4 to 6, the lift anchor (18) having a cut-out (19), into which the actuating section (14) of the lever element (5) engages, preferably an end of the actuating section (14) of the lever element (5), which end is arranged on the outside in the radial direction (R).

8. Clutch apparatus (1) according to Claim 7, the cut-out (19) of the lift anchor (18) being arranged closer to a frictional face (10) of the counterpressure plate (2) than the cut-out (7) of the tab section (6), in the axial direction (A), preferably both in the engaged state and in the disengaged state of the clutch apparatus (1).

9. Clutch apparatus (1) according to at least one of Claims 1 to 8, a disc spring (21) which is preferably annular being arranged in the axial direction (A) between the pressure plate (3) and the lever element (5) or the lever elements (5), and a wire ring (22) being arranged between the disc spring (21) and the lever element (5) or the lever elements (5).

10. Clutch apparatus (1) according to at least one of Claims 1 to 9, the counterpressure plate (2) having at least one fastening section (11) for fixed connection to an input component so as to rotate with it, preferably to a flywheel (23) or the secondary mass of a dual-mass flywheel.

11. Clutch apparatus (1) according to Claim 10, the counterpressure plate (2) having a plurality of fastening sections (11) which are spaced apart from one another in the circumferential direction (U), preferably uniformly, are configured in one piece with the counterpressure plate (2) and are arranged on a circular path.

12. Clutch apparatus (1) according to Claim 11, the fastening sections (11) being arranged in the radial direction (R) outside a frictional face (10) of the counterpressure plate (2).

13. Clutch apparatus (1) according to at least one of Claims 10 to 12, the tab section (6) or one of the tab sections (6) being arranged in the circumferential direction (U) between two adjacent fastening sections (11).

14. Clutch apparatus (1) according to Claim 13, the counterpressure plate (2) having an identical number of tab sections (6) and fastening sections (11), and the tab sections (6) and fastening sections (11) being arranged in an alternating manner in the circumferential direction (U).

## Revendications

1. Dispositif d'embrayage (1), en particulier pour une chaîne cinématique d'un véhicule automobile, comprenant une plaque de contrepression (2) et une plaque de pressage (3) pouvant être déplacée de manière limitée par au moins un élément de levier (5) dans la direction axiale (A) pour serrer, par engagement par friction, un disque d'embrayage (4) entre la plaque de contrepression (2) et la plaque de pressage (3), la plaque de contrepression (2) présentant au moins une portion de patte (6) sur laquelle l'élément de levier (5) est supporté de manière à pouvoir basculer, **caractérisé en ce que** la plaque de pressage (3) présente au moins une paire de saillies radiales (12) espacées l'une de l'autre dans la direction périphérique (U), entre lesquelles est disposée la portion de patte (6) ou l'une des portions de patte (6) de la plaque de contrepression (2).

2. Dispositif d'embrayage (1) selon la revendication 1, dans lequel les portions de patte (6) et des bords radialement extérieurs des saillies radiales (12) de la plaque de pressage (3) sont disposés essentiellement sur la même trajectoire circulaire.

3. Dispositif d'embrayage (1) selon la revendication 1 ou 2, dans lequel la portion de patte (6) forme avec la paire de saillies radiales (12) un entraînement en rotation pour le transfert d'un couple de la plaque de contrepression (2) à la plaque de pressage (3).

4. Dispositif d'embrayage (1) selon au moins l'une quelconque des revendications 1 à 3, dans lequel l'élément de levier (5) présente au moins une portion d'actionnement (14) qui est en relation fonctionnelle, de préférence en prise, avec une armature de relevage (18) qui est raccordée à la plaque de pressage (3) ou qui est réalisée d'une seule pièce avec la plaque de pressage (3) pour le déplacement axial de la plaque de pressage (3).

5. Dispositif d'embrayage (1) selon la revendication 4, dans lequel l'armature de relevage (18) est raccordée, de préférence rivetée, à la paire de saillies radiales (12) de la plaque de pressage (3), de préférence sur un côté de la plaque de pressage (3) tourné vers une surface de friction (10) de la plaque de contrepression (2).

6. Dispositif d'embrayage (1) selon la revendication 4 ou 5, dans lequel l'armature de relevage (18) vient en prise autour de la portion de patte (6) entre la paire de saillies radiales (12) de la plaque de pressage (3) dans la direction radiale (R) .

7. Dispositif d'embrayage (1) selon au moins l'une quelconque des revendications 4 à 6, dans lequel l'armature de relevage (18) présente un évidement (19) dans lequel vient en prise la portion d'actionnement (14) de l'élément de levier (5), de préférence une extrémité de la portion d'actionnement (14) de l'élément de levier (5) disposée à l'extérieur dans la direction radiale (R) .

8. Dispositif d'embrayage (1) selon la revendication 7, dans lequel l'évidement (19) de l'armature de relevage (18) est disposé dans la direction axiale (A), de préférence à la fois dans l'état embrayé et dans l'état débrayé du dispositif d'embrayage (1), plus près d'une surface de friction (10) de la plaque de contrepression (2) que l'évidement (7) de la portion de patte (6).

9. Dispositif d'embrayage (1) selon au moins l'une quelconque des revendications 1 à 8, dans lequel un ressort Belleville (21) de préférence de forme annulaire est disposé dans la direction axiale (A) entre la plaque de pressage (3) et l'élément de levier (5) ou les éléments de levier (5), et une bague en fil métallique (22) est disposée entre le ressort Belleville (21) et l'élément de levier (5) ou les éléments de levier (5).

10. Dispositif d'embrayage (1) selon au moins l'une quelconque des revendications 1 à 9, dans lequel la plaque de contrepression (2) présente au moins une portion de fixation (11) pour la connexion solidaire en rotation à un composant d'entrée, de préférence un volant d'inertie (23) ou la masse secondaire d'un volant d'inertie à deux masses.

11. Dispositif d'embrayage (1) selon la revendication 10, dans lequel la plaque de contrepression (2) présente plusieurs portions de fixation (11) espacées les unes des autres, de préférence uniformément dans la direction périphérique (U), qui sont réalisées d'une seule pièce avec la plaque de contrepression (2) et qui sont disposées sur une trajectoire circulaire.

12. Dispositif d'embrayage (1) selon la revendication 11, dans lequel les portions de fixation (11) sont disposées dans la direction radiale (R) à l'extérieur d'une surface de friction (10) de la plaque de contrepression (2).

13. Dispositif d'embrayage (1) selon au moins l'une quelconque des revendications 10 à 12, dans lequel la portion de patte (6) ou l'une des portions de patte (6) est disposée dans la direction périphérique (U) entre deux portions de fixation adjacentes (11).

14. Dispositif d'embrayage (1) selon la revendication 13, dans lequel la plaque de contrepression (2) présente un nombre identique de portions de patte (6) et de portions de fixation (11), et les portions de patte (6) et les portions de fixation (11) sont disposées en alternance dans la direction périphérique (U).
